# EUROPEAN PATENT APPLICATION

(11) **EP 4 496 115 A1**
(43) Date of publication of application: **22.01.2025**
(21) Application number: 24787040.5
(22) Date of filing: 30.05.2024
(51) Int. Cl.: H01M 50/645, H01M 50/627, H01M 50/553, H01M 50/15

(54) **BATTERY TOP COVER AND BATTERY**

(30) Priority: 30.05.2023 CN 202321345871 U; 30.05.2023 CN 202310625423
(71) Applicant: Eve Power Co., Ltd., Jingmen, Hubei 448000 (CN)
(72) Inventor: HE, Xiaowu, Jingmen, Hubei 448000 (CN); SHU, Kuanjin, Jingmen, Hubei 448000 (CN); ZHENG, Xu, Jingmen, Hubei 448000 (CN); AN, Suli, Jingmen, Hubei 448000 (CN); WANG, Junmin, Jingmen, Hubei 448000 (CN); WU, Xueyin, Jingmen, Hubei 448000 (CN); HE, Wei, Jingmen, Hubei 448000 (CN)
(74) Representative: Murgitroyd & Company
(86) International application number: PCT/CN2024/096361
(87) International publication number: WO 2024/245345

(57) **Abstract**

The present application discloses a battery cap and a battery. The battery cap includes a cap body, a conductive assembly, and a seal. The cap body is provided with a mounting hole. The conductive assembly includes an electrode pole disposed through the mounting hole. The electrode pole is provided with an electrolyte injection hole penetrating through. The seal plugs the electrolyte injection hole, and a length of the seal in a first direction is less than a length of the electrode pole in the first direction, the first direction being parallel to an axial direction of the electrolyte injection hole.

## Description

The present application claims priority to Chinese Patent Application No. 202321345871.8 filed with the China National Intellectual Property Administration on May 30, 2023; and
The present application also claims priority to Chinese Patent Application No. 202310625423.1 filed with China National Intellectual Property Administration on May 30, 2023;
The contents of the above applications are incorporated herein by reference in their entireties.

### TECHNICAL FIELD

The present disclosure relates to the field of battery manufacturing technologies, and more particularly, to a battery cap and a kind of battery.

### BACKGROUND

In the conventional battery structure, an electrolyte injection hole is usually provided on a body of a battery cap, and a columnar sealing gluey grain is also provided. After completion of the injection, the electrolyte injection hole is plugged with the sealing gluey grain to prevent electrolytes in a battery core from flowing out.

### SUMMARY

However, since a length of the sealing gluey grain is greater than a thickness of the body of the battery cap, the sealing gluey grain occupies a capacity in the battery core after plugging the electrolyte injection hole, and therefore, when the amount of the electrolyte injection in the battery core is fixed, a height of the battery core needs to be increased, resulting in an increase in a volume of the battery. Meanwhile, there also exists a risk with the sealing gluey of interfering with an electrode assembly of the battery, thereby affecting safety of the battery.

In a first aspect, the present disclosure provides a battery cap including:
a cap body provided with a mounting hole;
a conductive assembly including an electrode pole, the electrode pole being disposed through the mounting hole, the electrode pole being provided with an electrolyte injection hole, the electrolyte injection hole penetrating through both ends of the electrode pole;
a seal configured to plug the electrolyte injection hole and having a length in a first direction that is less than a length of the electrode pole in the first direction, the first direction being parallel to an axial direction of the electrolyte injection hole.

In a second aspect, the present disclosure further provides a battery including a battery case and a battery cap as described above, the battery cap being disposed on the battery case.

### BENEFICIAL EFFECT

The battery cap provided in the present disclosure includes a cap body, a conductive assembly, and a seal. An electrode pole is disposed through a mounting hole in the cap body and configured to draw out a voltage in a battery, which is a necessary structure of the battery. When electrolytes are injected, the electrolytes enter a battery core through an electrolyte injection hole on the electrode pole, and after the electrolyte injection is completed, the electrolyte injection hole is plugged with a seal. A length of the seal in a first direction is less than a length of the electrode pole in the first direction. By providing the electrolyte injection hole in the electrode pole, the battery cap not only avoids the seal from occupying a capacity of the battery core, which reduces a volume of the battery, but also prevents the seal from interfering with the electrode assembly, ensuring safety of the battery.

According to the battery provided in the present disclosure, the battery includes a battery case and the battery cap as described above. By providing the electrolyte injection hole in the electrode pole, the capacity of the battery core occupied by the seal is avoided, the volume of the battery is reduced while the capacity of the battery core is ensured, and interference of the seal with the electrode assembly of the battery is avoided, improving the safety of the battery.

### BRIEF DESCRIPTION OF THE DRAWINGS

FIG. 1 is an exploded view of a battery cap according to an embodiment of the present disclosure;
FIG. 2 is schematic diagram of part of a structure of a battery cap according to an embodiment of the present disclosure;
FIG. 3 is a cross-sectional view of a battery cap according to an embodiment of the present disclosure.
FIG. 4 is a partially enlarged view at site A in FIG. 3.

In the drawings:
1. cap body; 11. mounting hole;
2. conductive assembly; 21. electrode pole; 211. electrolyte injection hole; 212. guide groove; 22. terminal; 23. welding groove;
3. baffle assembly; 31. baffle; 32. connecting piece;
41. seal; 411. first sealing portion; 412, second sealing portion; 42. sealing sheet;
51. first insulating member; 52. second insulating member; 521. stop bar;
6. seal ring.

### DETAILED DESCRIPTION

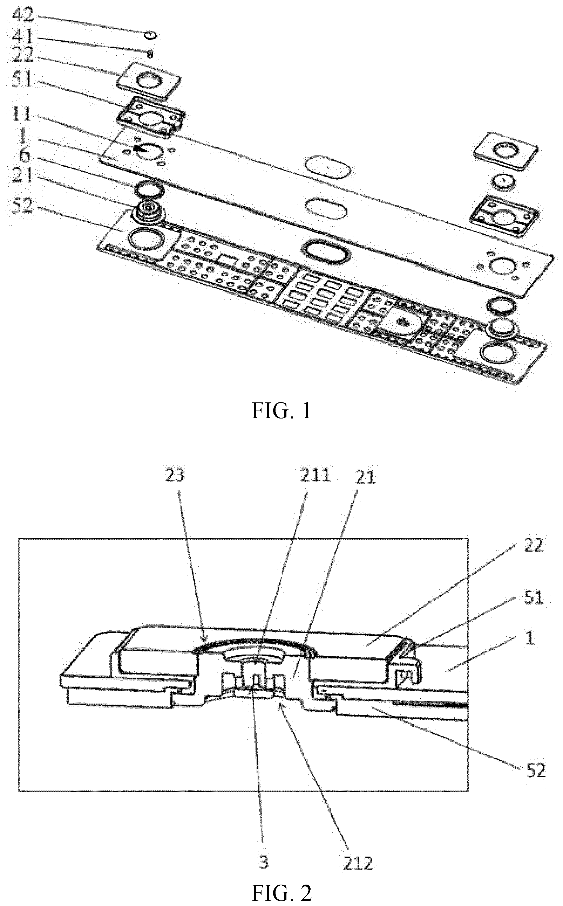

As shown in FIGS. 1 to 4, the present embodiment provides a battery cap including a cap body 1, a conductive assembly 2, and a seal 41. The cap body 1 is provided with a mounting hole 11. The conductive assembly 2 includes an electrode pole 21. The electrode pole 21 is disposed through the mounting hole 11. The electrode pole 21 is provided with an electrolyte injection hole 211. The electrolyte injection hole 211 penetrates through both ends of the electrode pole 21. The seal 41 is configured to plug the electrolyte injection hole 211. A length of the seal 41 in a first direction is less than a length of the electrode pole 21 in the first direction, and the first direction is parallel to an axial direction of the electrolyte injection hole 211.

The electrode pole 21 is disposed through the mounting hole 11 in the cap body 1 and configured to draw out a voltage in the battery, and is a necessary structure of the battery. When electrolytes are injected, the electrolytes enter a battery core through the electrolyte injection hole 211 in the electrode pole 21. After the electrolyte injection is completed, the electrolyte injection hole 211 is plugged with the seal 41, and the length of the seal 41 in the first direction is less than the length of the electrode pole 21 in the first direction. By providing the electrolyte injection hole 211 in the electrode pole 21, the battery cap not only avoids the seal 41 from occupying a capacity of the battery core, which reduces a volume of the battery, but also prevents the seal 41 from interfering with the electrode assembly, thereby ensuring safety of the battery.

The battery cap further includes a seal ring 6 which is fitted outside the electrode pole 21 and configured to seal a spacing between the electrode pole 21 and the mounting hole 11 to prevent the electrolytes from leaking from the spacing between the electrode pole 21 and the mounting hole 11. In the present embodiment, the seal ring 6 is made of a rubber material, and has a good sealing effect.

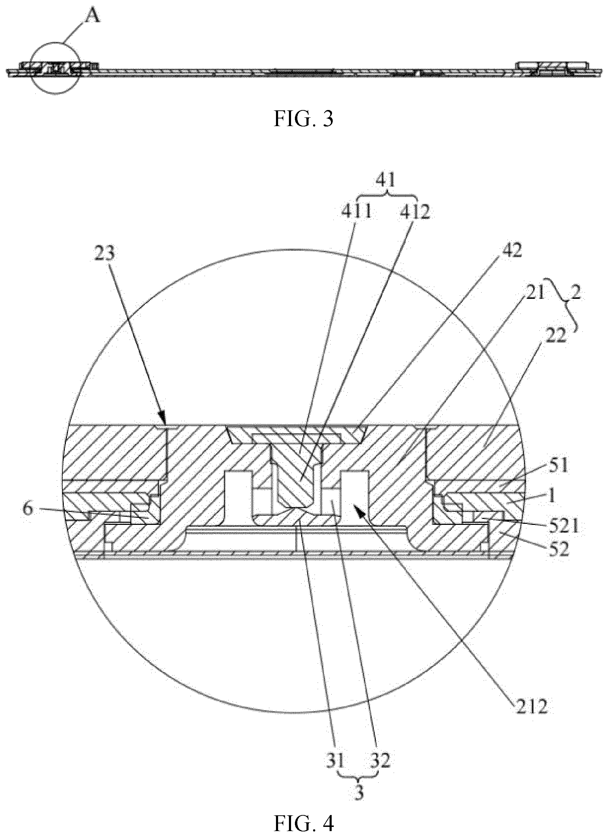

As shown in FIG. 4, the battery cap further includes a baffle assembly 3 and a plurality of connecting pieces 32. The baffle 31 is spaced apart from the electrolyte injection hole 211 in the axial direction of the electrolyte injection hole 211. The connecting pieces 32 are supported between edges of the baffle 31 and the electrolyte injection hole 211 at intervals. When the electrolytes are injected, the electrolytes flow out of the electrolyte injection hole 211 and then impinge on the baffle 31, followed by the electrolytes flowing out at the intervals between the plurality of connecting pieces 32 and entering the battery core, thereby avoiding impact on the battery core during the electrolyte injection and protecting the diaphragm(s) of the battery core. In the present embodiment, a surface of the baffle 31 is perpendicular to the axial direction of the electrolyte injection hole 211, so that the impact of the electrolyte may be effectively resisted. The connecting piece 32 is in the form of a block and is integrally formed with the baffle 31.

The baffle 31 is provided with a flow guide protrusion on one side toward the electrolyte injection hole 211. When the electrolytes are injected, the electrolytes flow out of the electrolyte injection hole 211 and then impinge on the flow guide protrusion of the baffle 31, and then falls from the flow guide protrusion to the surface of the baffle 31, and flows out at the intervals between the plurality of connecting pieces 32, thereby completing the electrolyte injection. The electrolytes flow toward the surface of the baffle 31 through the flow guide protrusion. Compared with directly impinging on the surface of the baffle 31, the kinetic energy of the electrolytes is increased, and the flow rate is accelerated, thereby further improving the electrolyte injection efficiency of the battery. In the present embodiment, the flow guide protrusion is arranged coaxially with the electrolyte injection hole 211 so that the electrolytes flowing out of the electrolyte injection hole 211 can smoothly flow through the flow guide protrusion. By way of example, the flow guide protrusion may be a hemisphere, a truncated cone, or a conical structure.

Corners of the baffle 31 are chamfered so that the flow of electrolytes on the baffle 31 is more smooth and the flow rate is increased.

As shown in FIG. 4, the seal 41 includes a first sealing portion 411 and a second sealing portion 412 that are connected. The second sealing portion 412 is located between the first sealing portion 411 and the baffle 31. A bottom end of the second sealing portion 412 protrudes from the electrolyte injection hole 211, and the second sealing portion 412 is provided at a distance from the connecting pieces 32. The first sealing portion 411 of the seal 41 can plug the electrolyte injection hole 211, and the second sealing portion 412 is provided at a distance from the connecting pieces 32, so that the seal 41 is easily and smoothly inserted into the electrolyte injection hole 211. In the present embodiment, a cross-sectional dimension of the first sealing portion 411 in a radial direction of the electrolyte injection hole 211 is greater than a cross-sectional dimension of the second sealing portion 412 in the radial direction of the electrolyte injection hole 211, and corners of the bottom end of the second sealing portion 412 are chamfered. By way of example, the seal 41 is a sealing gluey grain.

The bottom end of the second sealing portion 412 abuts the baffle 31, so that the seal 41 is firmly positioned and is not easily movable within the electrolyte injection hole 211 along the axial direction thereof. In the present embodiment, the bottom end of the second sealing portion 412 abuts the flow guide protrusion. In other embodiments, if the flow guide protrusion is not coaxial with the electrolyte injection hole 211, the bottom end of the second sealing portion 412 is provided at a distance from the flow guide protrusion.

The battery cap further includes a sealing sheet 42. The electrode pole 21 is provided with a first electrolyte injection hole section and a second electrolyte injection hole section that are connected and penetrate through it. The first electrolyte injection hole section and the second electrolyte injection hole section form the electrolyte injection hole 211 as described above. The first electrolyte injection hole section is located at a side of the second electrolyte injection hole section facing away from the battery core. The sealing sheet 42 is accommodated in the first electrolyte injection hole section, and the sealing sheet 42 is connected to the electrode pole 21. The seal 41 is inserted into the second electrolyte injection hole section. The sealing sheet 42 in the first electrolyte injection hole section and the seal 41 in the second electrolyte injection hole section are arranged to double-seal the electrolyte injection hole 211, so that the electrolytes in the battery core is prevented from overflowing. And during use of the battery, gas is generated inside the battery core, and the sealing sheet 42 plugged on an outer side of the seal 41 can prevent the seal 41 from being ejected from the electrolyte injection hole 211 under gas pressure. In the present embodiment, the sealing sheet 42 is made of aluminium and has good electrical conductivity, and can assist the electrode pole 21 in electrical conduction.

A pore diameter of the first electrolyte injection hole section is greater than that of the second electrolyte injection hole section, so that the electrolytes can flow into the electrolyte injection hole 211 more accurately when the electrolytes are injected. In the present embodiment, the pore diameter of the first electrolyte injection hole section decreases gradually in a direction toward the second electrolyte injection hole section, which serves as a flow guide.

As shown in FIG. 4, the sealing sheet 42 and the electrode pole 21 are connected by welding, and a gap is provided between the sealing sheet 42 and the seal 41 to accommodate a part of the gas generated during the welding process, so that the sealing sheet 42 is prevented from being ejected from the electrolyte injection hole 211.

As shown in FIGS. 2 and 4, one end of the electrode pole 21 adjacent to the battery core is provided with a guide groove 212, which communicates with the electrolyte injection hole 211. The baffle assembly 3 is located in the guide groove 212, and the connecting pieces 32 are provided at a distance from a groove wall of the guide groove 212. When the electrolytes flow out of the spacing between the plurality of connecting pieces 32, the electrolytes flow along the wall of the guide groove 212, so that the electrolytes entering the battery core quickly collect and the injection time is shortened.

The guide groove 212 includes a first groove section and a second groove section in communication. The second groove section is located on a side of the guide groove 212 adjacent to the battery core. The first groove section is located on a side of the guide groove 212 away from the battery core. An inner diameter of the second groove section is greater than an inner diameter of the first groove section, so that the weight of the battery can be reduced on the basis of expanding the battery capacity.

The conductive assembly 2 further includes a terminal 22 disposed on a side of the cap body 1 facing away from the battery core. The terminal 22 is provided with a connection hole. The electrode pole 21 is disposed through the connection hole, and a surface of the electrode pole 21 is flush with a surface of the terminal 22. The terminal 22 having a greater cross-sectional area serves as an electrical contact for connecting a load to the battery, assisting the electrode pole 21 having a smaller cross-sectional area in outputting electrical energy.

The battery cap further includes a first insulating member 51 sandwiched between the terminal 22 and the cap body 1 to prevent the cap body 1 having a conductive property from being in contact with the terminal 22 to cause a short circuit of the battery. In the present embodiment, the first insulating member 51 is provided with a recess. The terminal 22 is accommodated in the recess, with only a top surface exposed for contacting the load. By way of example, the first insulating member 51 is an upper plastic.

A welding groove 23 is formed at a junction of the electrode pole 21 and the terminal 22, and the electrode pole 21 and the terminal 22 are connected by welding. Welding is performed in the welding groove 23, which may compensate for a height of the protrusion produced by the welding and avoid affecting the surface flatness of the terminal 22 and the electrode pole 21.

The battery cap further includes a second insulating member 52 disposed on a side of the cap body 1 adjacent to the battery core. A second avoidance hole is provided in the second insulating member 52. A stop bar 521 is provided at an edge of the second avoidance hole. The electrode pole 21 includes a pillar portion and a convex portion. The convex portion is circumferentially disposed around the pillar portion. The pillar portion is disposed through the second avoidance hole and the mounting hole 11. The convex portion is disposed through the second avoidance hole and abuts the stop bar 521. The second insulating member 52 isolates the cap body 1 with electrically conductive properties from the battery core to avoid battery leakage. Meanwhile, the electrode pole 21 abuts the stop bar 521 on the second insulating member 52, so that the electrode pole 21 is fixed with respect to the positions of the first insulating member 51 and the second insulating member 52. In the present embodiment, the guide groove 212 is provided at one end of the pillar portion adjacent to the convex portion. The convex portion is shaped like a flange of the pillar portion. By way of example, the second insulating member 52 is a lower plastic.

The present embodiment further provides a battery including a battery case and a battery cap as described above, wherein the battery cap is provided on the battery case. The electrolyte injection hole 211 is provided on the electrode pole 21, so that the capacity of the battery core is prevented from being occupied by the seal 41, the volume of the battery is reduced while the capacity of the battery core is ensured, and interference of the seal 41 with the electrode assembly of the battery is avoided, thereby improving the safety of the battery.

## Claims

1. A battery cap comprising:
a cap body (1) provided with a mounting hole (11);
a conductive assembly (2) including an electrode pole (21), the electrode pole (21) being disposed through the mounting hole (11), the electrode pole (21) being provided with an electrolyte injection hole (211), the electrolyte injection hole (211) penetrating through both ends of the electrode pole (21);
a seal (41) configured to plug the electrolyte injection hole (211) and having a length in a first direction that is less than a length of the electrode pole (21) in the first direction, the first direction being parallel to an axial direction of the electrolyte injection hole (211).

2. The battery cap according to claim 1, further comprising a baffle assembly (3) including a baffle (31) and a plurality of connecting pieces (32), the baffle (31) being spaced apart from the electrolyte injection hole (211) in the axial direction of the electrolyte injection hole (211), the connecting pieces (32) being supported between edges of the baffle (31) and the electrolyte injection hole (211).

3. The battery cap according to claim 2, wherein the seal (41) includes a first sealing portion (411) and a second sealing portion (412) that are connected, the second sealing portion (412) being located between the first sealing portion (411) and the baffle (31), a bottom end of the second sealing portion (412) protruding from the electrolyte injection hole (211), and the second sealing portion (412) being provided at a distance from the connecting pieces (32).

4. The battery cap according to claim 3, wherein a cross-sectional dimension of the first sealing portion (411) in a radial direction of the electrolyte injection hole (211) is greater than a cross-sectional dimension of the second sealing portion (412) in the radial direction of the electrolyte injection hole (211), and corners of the bottom end of the second sealing portion (412) are chamfered.

5. The battery cap according to claim 3, wherein the bottom end of the second sealing portion (412) abuts the baffle (31).

6. The battery cap according to claim 3, wherein the baffle (31) is provided with a flow guide protrusion on one side toward the electrolyte injection hole (211), and the bottom end of the second sealing portion (412) is provided at a distance from or abuts the flow guide protrusion.

7. The battery cap according to claim 6, wherein the flow guide protrusion is arranged coaxially with the electrolyte injection hole (211).

8. The battery cap according to any one of claims 1 to 7, further comprising a sealing sheet (42), the electrode pole (21) being provided with a first electrolyte injection hole section and a second electrolyte injection hole section that are connected and penetrate through the electrode pole (21), the first electrolyte injection hole section being located on a side of the second electrolyte injection hole section facing away from a battery core, the sealing sheet (42) being accommodated in the first electrolyte injection hole section, and the sealing sheet (42) being connected to the electrode pole (21), the sealing sheet (41) being inserted into the second electrolyte injection hole section.

9. The battery cap according to claim 8, wherein a pore diameter of the first electrolyte injection hole section is greater than a pore diameter of the second electrolyte injection hole section; and/or the pore diameter of the first electrolyte injection hole section decreases gradually in a direction toward the second electrolyte injection hole section.

10. The battery cap according to claim 8, wherein the sealing sheet (42) and the electrode pole (21) are connected by welding, and a gap is provided between the sealing sheet (42) and the seal (41).

11. The battery cap according to any one of claims 2 to 7, wherein one end of the electrode pole (21) adjacent to the battery core is provided with a guide groove (212), the guide groove (212) communicates with the electrolyte injection hole (211), the baffle assembly (3) is located in the guide groove (212), and the connecting pieces (32) are provided at a distance from a groove wall of the guide groove (212).

12. The battery cap according to claim 11, wherein the guide groove (212) includes a first groove section and a second groove section in communication, the second groove section being located on a side of the guide groove (212) adjacent to the battery core, the first groove section being located on a side of the guide groove (212) away from the battery core, an inner diameter of the second groove section being greater than an inner diameter of the first groove section.

13. The battery cap according to any one of claims 1 to 7, wherein the conductive assembly (2) further includes a terminal (22) disposed on a side of the cap body (1) facing away from a battery core, the terminal (22) being provided with a connection hole, the electrode pole (21) being disposed through the connection hole, and a surface of the electrode pole (21) being flush with a surface of the terminal (22), the battery cap further comprising a first insulating member (51) sandwiched between the terminal (22) and the cap body (1).

14. The battery cap according to claim 13, wherein a welding groove (23) is formed at a junction of the electrode pole (21) and the terminal (22), and the electrode pole (21) and the terminal (22) are connected by welding.

15. The battery cap according to any one of claims 1-14, further comprising a seal ring (6) fitted outside the electrode pole (21) and configured to seal a spacing between the electrode pole (21) and the mounting hole (11).

16. A battery comprising a battery case and the battery cap according to any one of claims 1 to 15, the battery cap being provided on the battery case.
